# EUROPÄISCHE PATENTSCHRIFT

(11) **EP 1 296 108 B1**
(45) Veröffentlichungstag und Bekanntmachung des Hinweises auf die Patenterteilung: **21.03.2012**
(21) Anmeldenummer: 02018311.7
(22) Anmeldetag: 14.08.2002
(51) Int. Cl.: F28F 9/00, F01P 3/18

(54) **Wärmetauscher und gehäuseartige Halterung für den Wärmetauscher**
Heat exchanger and housing like support for heat exchanger
Echangeur de chaleur et support en forme de carter pour échangeur de chaleur

(30) Priorität: 20.09.2001 DE 10146258
(43) Veröffentlichungstag der Anmeldung: 26.03.2003
(73) Patentinhaber: Behr GmbH & Co. KG, 70469 Stuttgart (DE)
(72) Erfinder: Banzhaf, Matthias, Dipl.-Ing., 74074 Heilbronn (DE); Emrich, Karsten, 70190 Stuttgart (DE); Hendrix, Daniel, 70374 Stuttgart (DE)
(74) Vertreter: Grauel, Andreas

(56) Entgegenhaltungen:
- EP-A- 0 714 797
- DE-A- 19 614 029
- DE-A- 19 902 504
- FR-A- 2 645 209
- US-A- 5 467 818

## Beschreibung

Die vorliegende Erfindung betrifft ein System mit einem Wärmetauscher, insbesondere einem Kühler für ein Kraftfahrzeug, und mit einer gehäuseartigen Halterung für den Wärmetauscher, wobei die gehäuseartige Halterung eine Einschuböffnung aufweist, durch die der Wärmetauscher in die gehäuseartige Halterung einschiebbar ist.

Die gattungsgemäßen Systeme und ihre Bestandteile werden ohne darauf beschränkt zu sein beispielsweise im Zusammenhang mit der Ladeluftkühlung eingesetzt. Die bekannten in diesem Zusammenhang verwendeten gehäuseartigen Halterungen weisen eine komplizierte Form auf, um die Ladeluft- und die Kühlmittelführung zu ermöglichen. Die bekannten gehäuseartigen Halterungen sind unabhängig vom Wärmetauscher zumindest zweiteilig ausgeführt. Daher sind sowohl die gehäuseartigen Halterungen als auch die an diese angepassten Wärmetauscher relativ kostenintensiv und kompliziert, was häufig durch erforderliche Halterungen und Dichtflächen begründet ist, die zur gegenseitigen Abdichtung von gehäuseartiger Halterung und Wärmetauscher erforderlich sind. Ein weiteres beim Stand der Technik auftretendes Problem besteht darin, dass die gehäuseartigen Halterungen häufig keinen hohen Druckbelastungen standhalten, was insbesondere durch die mehrteilige Ausführung bedingt sein kann.

Die Drückschrift FR 2645209 offenbart eine Anordnung einer Ladeluftkühlers in einem Gehäuse mit einer Eintrittstutzen und vier Austrittstutzen.

Die US 5,467,818 offenbart die Anordnung eines Verdampfers im Gehäuse einer Klimaanlage, der in eine von einem Deckel verschließbare Öffnung eingesetzt wird.

Der Erfindung liegt daher die Aufgabe zugrunde, die gattungsgemäßen Systeme beziehungsweise deren Bestandteile derart weiterzubilden, dass sie kostengünstig hergestellt und montiert sowie auch bei hohen Druckbelastungen eingesetzt werden können.

Diese Aufgabe wird durch die im Anspruch 1 angegebenen Merkmale gelöst.

Vorteilhafte Ausführungsformen und Weiterbildungen der Erfindung ergeben sich aus den Unteransprüche.

Das erfindungsgemäße System baut auf dem gattungsgemäßen Stand der Technik dadurch auf, dass der Wärmetauscher eine Verschlussfläche aufweist, die die Einschuböffnung nach dem Einschieben des Wärmetauschers verschließt. Die gehäuseartige Halterung kann den Wärmetauscher dabei in ähnlicher Weise aufnehmen, wie ein Rahmen ein Dia beziehungsweise ein Projektor einen Diarahmen. Dies ermöglicht es beispielsweise den Wärmetauscher mit einer einzigen umlaufenden Verbindungsfläche gegenüber der gehäuseartigen Halterung abzudichten. Weiterhin kann die gehäuseartige Halterung einstückig ausgebildet werden, so dass sie auch hohen Druckbelastungen gewachsen ist.

Bei bevorzugten Ausführungsformen des erfindungsgemäßen Systems ist weiterhin vorgesehen, dass die Verschlussfläche eine Flächennormale aufweist, die sich nach dem Einschieben des Wärmetauschers in die gehäuseartige Halterung senkrecht zu einer Gasdurchströmungsrichtung erstreckt, in der der Wärmetauscher im Betrieb zur Kühlung eines Kühlmediums von einem Gas durchströmt wird. In diesem Zusammenhang ist es beispielsweise möglich, dass die Einschuböffnung bezogen auf die montierte gehäuseartige Halterung in deren Oberseite gebildet ist. Der Wärmetauscher kann in an sich bekannter Weise voneinander durch Lamellen beabstandete Rohre aufweisen, durch die das Kühlmedium strömt. Zwischen den Lamellen strömt dabei im Betrieb ein Gas, beispielsweise Luft.

Zusätzlich oder alternativ kann im Zusammenhang mit dem erfindungsgemäßen System vorgesehen sein, dass der Wärmetauscher nach dem Einschieben in die gehäuseartige Halterung derart gegenüber der gehäuseartigen Halterung abgedichtet wird, dass im Betrieb zwischen dem Wärmetauscher und der gehäuseartigen Halterung im Wesentlichen kein Gas durchströmt, das dazu vorgesehen ist, durch den Wärmetauscher gekühlt zu werden. Die Abdichtung zwischen der gehäuseartigen Halterung und dem Wärmetauscher kann dabei beispielsweise durch ein formschlüssiges Anliegen von geeigneten Flächen dieser Bestandteile erzielt werden. Zusätzlich oder alternativ können geeignete Dichtmittel eingesetzt werden.

Bei dem Wärmetauscher ist weiterhin vorgesehen , dass er einen Kühlmediumeinlassstutzen und einen Kühlmediumauslassstutzen aufweist, und dass der Kühlmediumeinlassstutzen und/oder der Kühlmediumauslassstutzen an der Verschlussfläche angeordnet und/oder durch diese hindurchgeführt ist. Weil sowohl der Kühlmediumeinlassstutzen als auch der Kühlmediumauslassstutzen an der Verschlussfläche angeordnet beziehungsweise durch diese hindurch geführt sind, sind an der gehäuseartigen Halterung keine kompliziert abzudichtenden Durchführungen für den Kühlmediumeinlassstutzen und den Kühlmediumauslassstutzen erforderlich.

Insbesondere im vorstehend erläuterten Zusammenhang kann bei dem Wärmetauscher weiterhin vorgesehen sein, dass der Kühlmediumeinlassstutzen und/oder der Kühlmediumauslassstutzen mit der Verschlussfläche verlötet ist. Die entsprechenden Lötstellen können dabei bereits bei der Herstellung des Wärmetauschers vorgesehen werden, so dass diesbezüglich bei der Zusammenführung von Wärmetauscher und gehäuseartiger Halterung keine weiteren Schritte erforderlich sind.

Bei bevorzugten Ausführungsformen des Wärmetauschers ist weiterhin vorgesehen, dass die Verschlussfläche eine Seitenfläche des Wärmetauschers bildet. In diesem Fall kann die Einschuböffnung sich beispielsweise über die gesamte Breite der gehäuseartigen Halterung erstrecken, deren Breite vorzugsweise an die Breite des Wärmetauschers angepasst ist.

Im Zusammenhang mit dem Wärmetauscher kann weiterhin vorgesehen sein, dass die Verschlussfläche den Wärmetauscher nach Art eines Kragens erweitert. Eine derartige kragenartige Erweiterung erleichtert die gegenseitige Abdichtung von Wärmetauscher beziehungsweise Verschlussfläche und Einschuböffnung beziehungsweise gehäuseartiger Halterung. Zusätzlich oder alternativ ist es denkbar, die Begrenzungsfläche der Einschuböffnung und die Verschlussfläche in Napfscheibe-Rippe-Bauweise vorzusehen. Die Verbindung von gehäuseartiger Halterung und Wärmetauscher beziehungsweise Verschlussfläche kann beispielsweise durch Schweißen und/oder Schrauben erfolgen.

Gegebenenfalls kann im Zusammenhang mit dem Wärmetauscher vorgesehen sein, dass er zumindest an einigen seiner Umfangsseiten Dichtmittel zur Abdichtung gegenüber der gehäuseartigen Halterung aufweist. Bei diesen Dichtmitteln handelt es sich vorzugsweise um umlaufende Dichtmittel, die an die Form der Einschuböffnung angepasst sein können.

Der Wärmetauscher kann ohne darauf beschränkt zu sein ein Kühlmittelkühler, ein Luftvorwärmer, ein Ladeluftkühler, ein Ladeluftvorkühler oder ein Ladeluftzusatzkühler sein.

Im Zusammenhang mit der gehäuseartigen Halterung kann vorgesehen sein, dass sie Führungsmittel aufweist, die den Wärmetauscher beim Einschieben in die gehäuseartige Halterung führen. Diese Führungsmittel können beispielsweise durch eine oder mehrere Innenwände der gehäuseartigen Halterung gebildet sein. Zusätzlich oder alternativ können Stege, Nuten und dergleichen vorgesehen werden.

Bei der gehäuseartigen Halterung ist vorzugsweise weiterhin vorgesehen, dass sie Halterungsmittel aufweist, die den Wärmetauscher nach dem Einschieben in die gehäuseartige Halterung haltern. Diese Halterungsmittel, die gegebenenfalls ganz oder teilweise identisch mit den Führungsmitteln sein können, können beispielsweise ebenfalls durch eine oder mehrere Innenwände der gehäuseartigen Halterung und/oder Stege, Nuten und dergleichen gebildet sein.

Bei der gehäuseartigen Halterung ist vorgesehen, dass sie einen Gaseinlassstutzen und einen Gasauslassstutzen zum Ein- und Auslassen von Gas aufweist, das im Betrieb zur Kühlung eines Kühlmediums durch den Wärmetauscher strömt. Der Gaseinlassstutzen und/oder der Gasauslassstutzen können beispielsweise einen runden sich in Richtung auf den Wärmetauscher zu konisch erweiternden Durchmesser aufweisen. Weiterhin können Nuten, Wulste und dergleichen vorgesehen sein, mit deren Hilfe beispielsweise Schläuche an dem Gaseinlassstutzen und/oder dem Gasauslassstutzen befestigt werden können.

Bei der erfindungsgemäßen gehäuseartigen Halterung ist weiterhin vorgesehen, dass sie einen Gaseinlassstutzen auf einer Seite des Wärmetauschers und einen Gasauslassstutzen auf einer anderen Seite des Wärmetauschers aufweist. Somit muss das im Betrieb zur Kühlung eines Kühlmediums durch den Wärmetauscher strömende Gas nicht umgelenkt werden, so dass sich ein besonders niedriger Strömungswiderstand ergibt.

Bei bevorzugten Ausführungsformen der gehäuseartigen Halterung ist vorgesehen, dass diese einstückig gebildet ist. Je nach dem aus welchem Material die gehäuseartige Halterung hergestellt wird, kommen zu diesem Zweck beispielsweise Spritzguss, Tiefziehverfahren oder auch allgemeine Gussverfahren in Betracht.

Bei bestimmten Ausführungsformen der gehäuseartigen Halterung kann vorgesehen sein, dass diese einen Anschlussflansch aufweist, der zur Befestigung eines Ladergehäuses vorgesehen ist. In diesem Fall kann der Anschlussflansch am Gaseinlassstutzen der gehäuseartigen Halterung gebildet sein.

Weiterhin kommen Ausführungsformen der gehäuseartigen Halterung in Betracht, bei denen diese Bestandteil eines Ladergehäuses ist. Beispielsweise ist es möglich, das Ladergehäuse einstückig an einen Gaseinlassstutzen der gehäuseartigen Halterung anzuformen.

Die Erfindung wird nachfolgend anhand der zugehörigen Zeichnungen noch näher erläutert.

Es zeigen:
- Figur 1: eine teilweise geschnittene perspektivi- sche Ansicht einer ersten Ausführungsform des erfindungsgemäßen Systems;
- Figur 2: einen vergrößerten Ausschnitt der Dar- stellung von Figur 1, der die gegenseiti- ge Lage von Einschuböffnung und Ver- schlussfläche veranschaulicht;
- Figur 3: eine perspektivische Darstellung einer ersten Ausführungsform der gehäuseartigen Halterung, die für das in den Figuren 1 und 2 dargestellte System verwendet werden kann;
- Figur 4: eine perspektivische teilweise geschnit- tene Ansicht der gehäuseartigen Halterung von Figur 3;
- Figur 5: eine perspektivische Ansicht einer Aus- führungsform des Wärme- tauschers, der für das in den Figuren 1 und 2 dargestellte System verwendet wer- den kann;
- Figur 6: eine perspektivische teilweise geschnit- tene Ansicht des Wärmetauschers von Figur
- 5; Figur 7: einen vergrößerten Ausschnitt der Dar- stellung von Figur 6, der eine kragenar- tige Erweiterung der Verschlussfläche veranschaulicht;

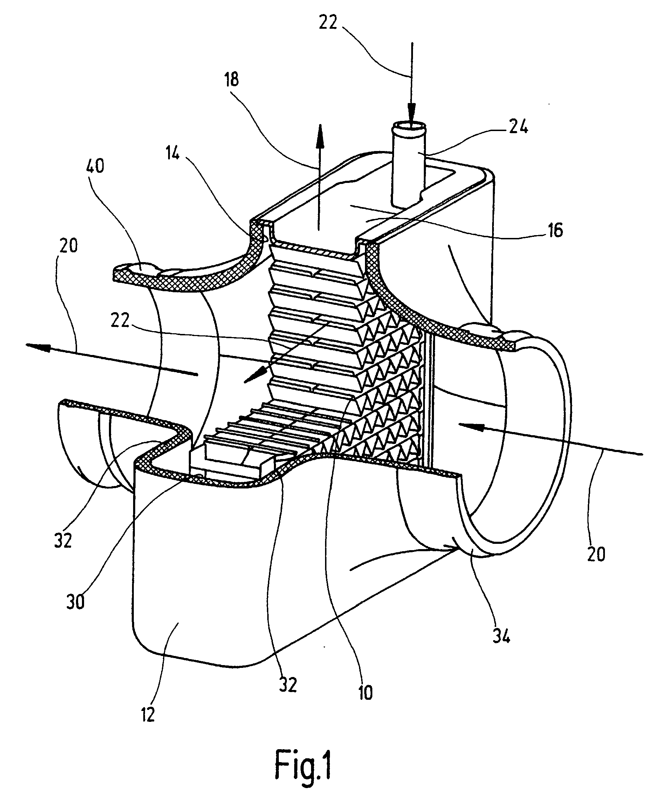

Figur 1 zeigt eine teilweise geschnittene perspektivische Ansicht einer ersten Ausführungsform des erfindungsgemäßen Systems. Dabei ist ein Wärmetauscher 10 durch eine in einer gehäuseartigen Halterung 12 vorgesehene Einschuböffnung 14 in die gehäuseartige Halterung 12 eingeschoben. Der Wärmetauscher 10 weist eine Verschlussfläche 16 auf, deren Abmessungen an diejenigen der Einschuböffnung 14 angepasst sind. Die Verschlussfläche 16 weist eine Flächennormale 18 auf, die sich senkrecht zu einer Gasdurchströmungsrichtung 20 erstreckt, in der der Wärmetauscher 10 im Betrieb zur Kühlung eines Kühlmediums 22 von einem Gas durchströmt wird, beispielsweise von Luft. Das den Wärmetauscher 10 im Betrieb durchströmende Gas tritt dabei durch einen Gaseinlassstutzen 34 ein, der einstückig mit der gehäuseartigen Halterung gebildet ist und einen kreisförmigen sich in Richtung auf den Wärmetauscher 10 zu konisch erweiternden Durchmesser ausweist. Nachdem das Gas zwischen Lamellen des Wärmetauschers 10 hindurchgeströmt ist, tritt es durch einen Gasauslassstutzen 40 aus der gehäuseartigen Halterung 12 aus. An der Verschlussfläche 16 des Wärmetauschers 10 ist ein Kühlmediumeinlassstutzen 24 und ein nicht dargestellter Kühlmediumauslassstutzen vorgesehen. Das Kühlmedium 22 wird dabei senkrecht zur Gasdurchströmungsrichtung 20 und zur Flächennormale 18 der Verschlussfläche 16 durch den Wärmetauscher 10 geführt, wie dies durch den entsprechenden Pfeil angedeutet ist. Die gehäuseartige Halterung 12 weist Führungs- und Halterungsmittel 30, 32 auf, die bezogen auf die Gasdurchströmungsrichtung 20 durch die Seitenwände 30 und die Vorder- und Rückseiten 32, der gehäuseartigen Halterung 12 gebildet sind. Bei der in Figur 1 dargestellten Ausführungsform des erfindungsgemäßen Systems sind der Gaseinlassstutzen 34 und der Gasauslassstutzen 40 auf verschiedenen Seiten des Wärmetauschers 10 jedoch gegenüberliegend angeordnet, was für das im Betrieb durch den Wärmetauscher 10 strömende Gas einen besonders niedrigen Strömungswiderstand ergibt.

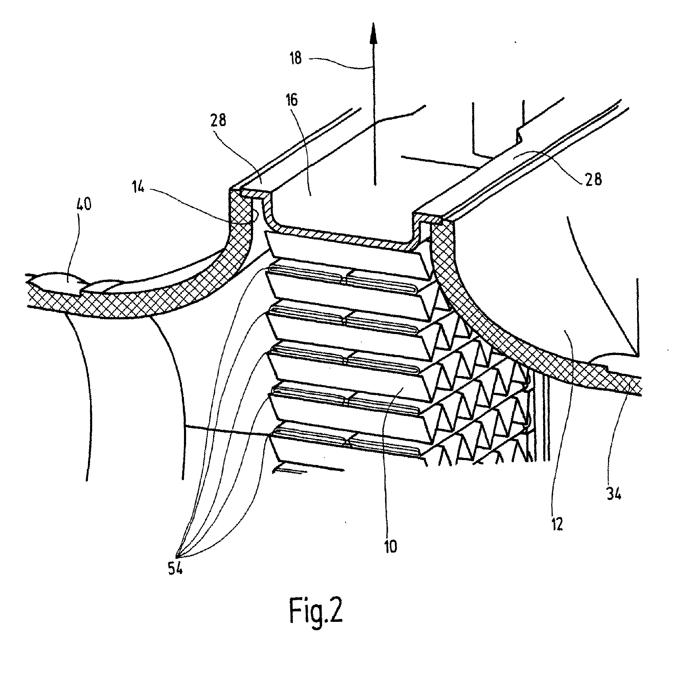

Figur 2 zeigt einen vergrößerten Ausschnitt der Darstellung von Figur 1, der die gegenseitige Lage von Einschuböffnung 14 und Verschlussfläche 16 veranschaulicht. Der Darstellung von Figur 2 ist insbesondere zu entnehmen, dass die Verschlussfläche 16 zur Abdichtung gegenüber der gehäuseartigen Halterung 12 einen Kragen 28 aufweist, der sich ausgehend von einem zur Flächennormalen 18 parallelen Abschnitt der Verschlussfläche 16 senkrecht zur Flächennormalen 18 erstreckt. Die Verschlussfläche 16 ist somit in die Einschuböffnung 14 eingepasst, die durch Wände der gehäuseartigen Halterung 12 begrenzt wird, die sich an den Gaseinlassstutzen 34 und den Gasauslassstutzen 40 anschließen beziehungsweise die diese bilden oder mitbilden. In Figur 2 sind weiterhin Kanäle 54 des Wärmetauschers 10 zu erkennen, durch die das Kühlmittel 22 (in Figur 2 nicht dargestellt) senkrecht zur Flächennormale 18 und zur Gasdurchströmungsrichtung 20 (in Figur 2 nicht dargestellt) strömt.

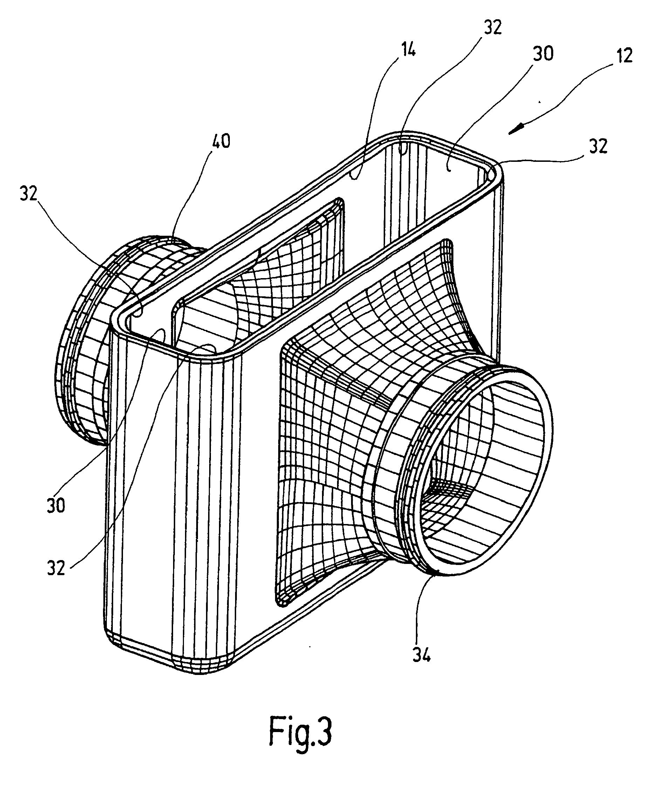

Figur 3 zeigt eine perspektivische Darstellung einer ersten Ausführungsform der gehäuseartigen Halterung 12, die für das in den Figuren 1 und 2 dargestellte System verwendet werden kann. Die in Figur 3 dargestellte gehäuseartige Halterung 12 ist einstückig ausgeführt und weist in ihrem oberen Bereich eine Einschuböffnung 14 auf, die sich im Wesentlichen über die gesamte Oberseite erstreckt. Die Seiten sowie die Vorder- und Rückwand der gehäuseartigen Halterung 12 bilden Führungs- und Halterungsmittel 30, 32, die dazu vorgesehen sind, einen durch die Einschuböffnung 14 eingeschobenen Wärmetauscher beim Einschieben zu Führen und anschließend zu Haltern. Der Gaseinlassstutzen 34 und der Gasauslassstutzen 40 sind bei der in Figur 3 dargestellten Ausführungsform derart angeordnet, dass sie sich nach dem Einschieben eines Wärmetauschers 10 (in Figur 3 nicht dargestellt) auf unterschiedlichen Seiten von diesem befinden.

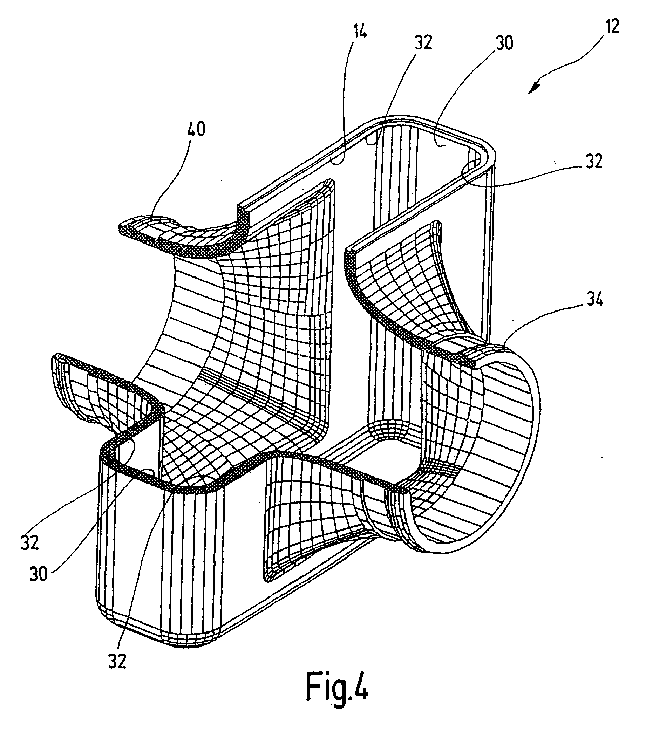

Figur 4 zeigt eine perspektivische teilweise geschnittene Ansicht der gehäuseartigen Halterung 12 von Figur 3. Figur 4 ist insbesondere zu entnehmen, dass der Gaseinlassstutzen 34 und der Gasauslassstutzen 40 gegenüberliegend angeordnet sind, was ein besonders niedrigen Strömungswiderstand für das Gas ergibt, das im Betrieb durch den Wärmetauscher beziehungsweise zwischen dessen Lamellen hindurchströmt. Der Darstellung von Figur 4 ist weiterhin zu entnehmen, dass der Rand der Einschuböffnung 14 stufenartig ausgebildet ist, was die Abdichtung gegenüber der Verschlussfläche des Wärmetauschers erleichtert. Figur 4 ist weiterhin zu entnehmen, dass die die Führungs- und Halterungsmittel 30, 32 bildenden Seitenwände der gehäuseartigen Halterung 12 im Wesentlichen rechtwinklig zueinander mit abgerundeten Ecken ausgebildet sind.

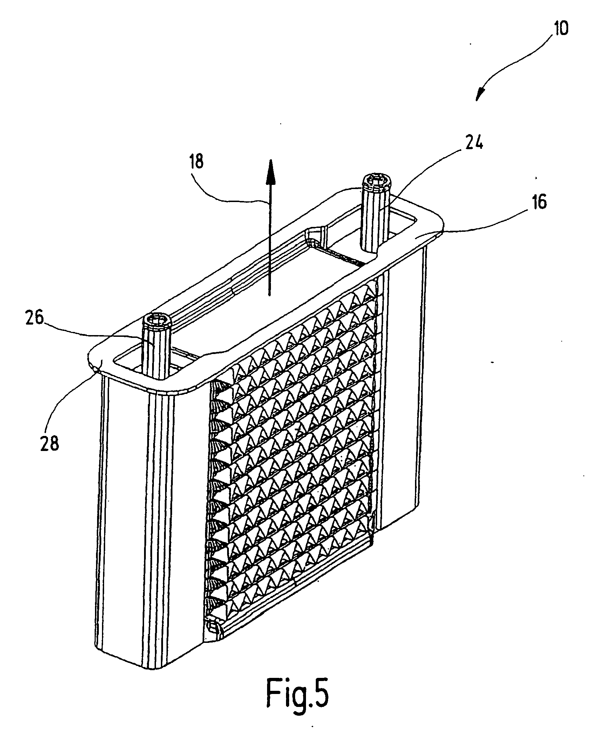

Figur 5 zeigt eine perspektivische Ansicht einer Ausführungsform des Wärmetauschers 10, der für das in den Figuren 1 und 2 dargestellte System verwendet werden kann. Der dargestellte Wärmetauscher 10 ist dazu vorgesehen, von oben in die Einschuböffnung der in den Figuren 1 bis 4 dargestellten gehäuseartigen Halterung eingeschoben zu werden. Der Wärmetauscher 10 weist einen Kühlmediumeinlassstutzen 24 und einen Kühlmediumauslassstutzen 26 auf. Sowohl der Kühlmediumeinlassstutzen 24 als auch der Kühlmediumauslassstutzen 26 ist auf der Verschlussfläche 16 angeordnet, die die obere Seitenwand des Wärmetauschers 10 bildet. Die Flächennormale der Verschlussfläche 16 ist mit 18 bezeichnet. Die Verschlussfläche 16 weist einen Kragen 28 auf, dessen Abmessungen beispielsweise derart gewählt werden können, dass er formschlüssig in den stufenförmig ausgebildeten Rand der Einschuböffnung 14 (in Figur 5 nicht dargestellt) der gehäuseartigen Halterung 12 (in Figur 5 nicht dargestellt) eingeschoben werden kann.

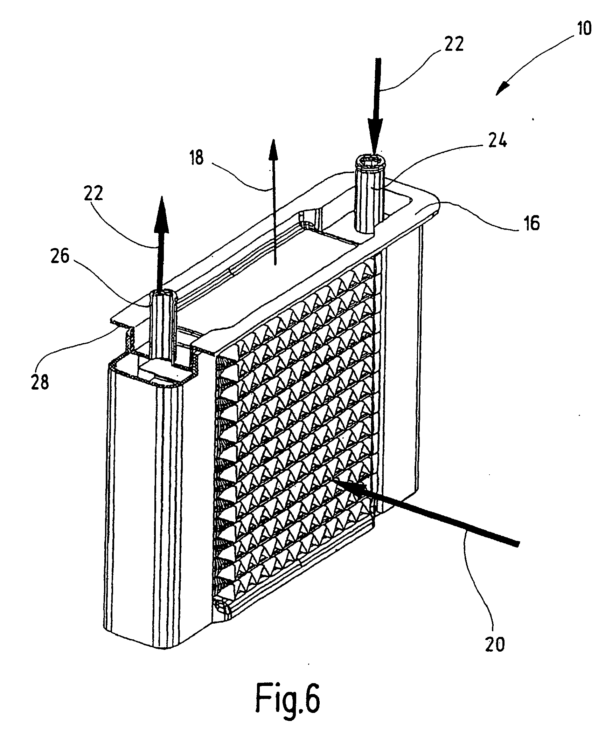

Figur 6 zeigt eine perspektivische teilweise geschnittene Ansicht des Wärmetauschers 10 von Figur 5. Figur 6 ist insbesondere zu entnehmen, dass die Flächennormale 18 der Verschlussfläche 16 des Wärmetauschers 10 sich senkrecht zur Gasdurchströmungsrichtung 20 erstreckt, in der der Wärmetauscher 10 im Betrieb zur Kühlung eines Kühlmediums 22 von einem Gas durchströmt wird. Das Kühlmedium 22 tritt durch den Kühlmediumeinlassstutzen 24 in den Wärmetauscher 10 ein und durch den Kühlmediumauslassstutzen 26 aus den Wärmetauscher 10 aus.

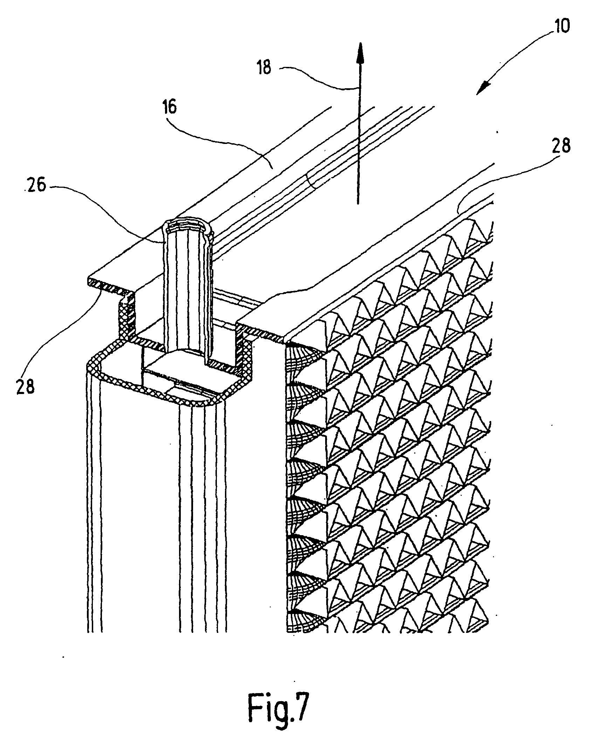

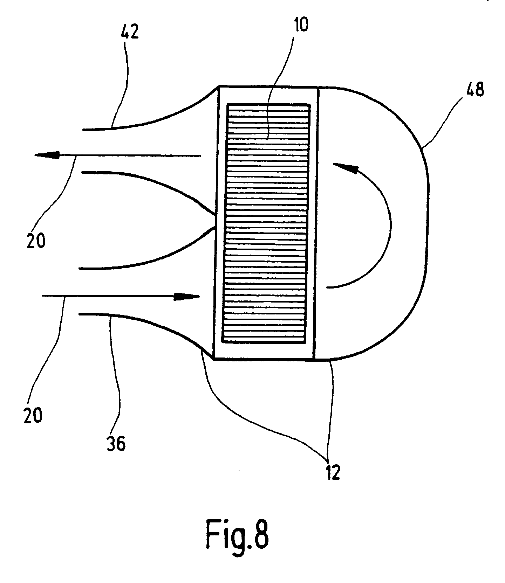

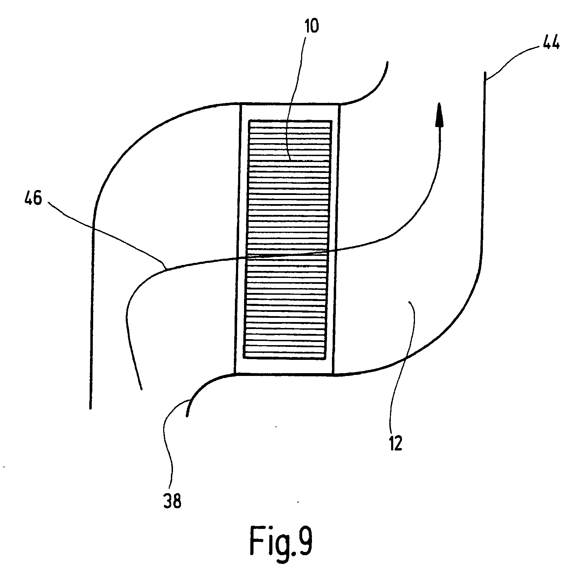

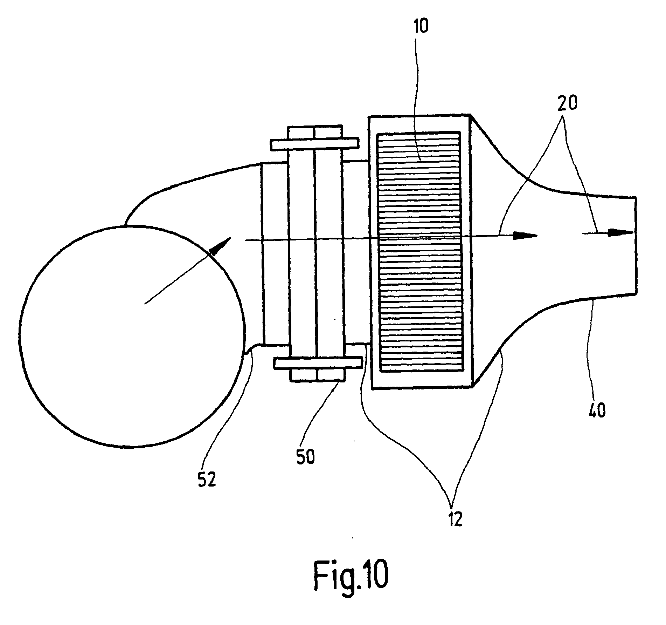

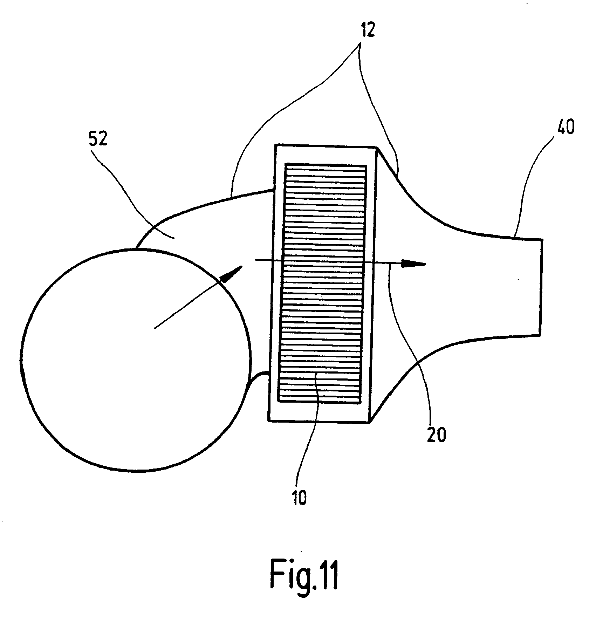

Figur 7 zeigt einen vergrößerten Ausschnitt der Darstellung von Figur 6, der eine kragenartige Erweiterung der Verschlussfläche 16 veranschaulicht. Figur 7 ist insbesondere zu entnehmen, wie der Kühlmediumauslassstutzen 26 durch die Verschlussfläche 16 geführt ist, die die Oberseite des Wärmetauschers 10 bildet. Die einstückig ausgebildete Verschlussfläche 16 beziehungsweise deren Kragen 28 ist deckelartig und formschlüssig in beziehungsweise auf dem Wärmetauscher 10 angeordnet, um dessen Oberseite zu bilden. Der dargestellte Wärmetauscher 10 ist kostengünstig herstellbar wobei die Montage des erfindungsgemäßen Systems einfach durch Einschieben des Wärmetauschers 10 in die gehäuseartige Halterung vorgenommen werden kann.

Zur Herstellung der gehäuseartigen Halterung beziehungsweise zur Verbindung der gehäuseartigen Halterung mit dem Wärmetauscher können alle geeigneten Fügeverfahren eingesetzt werden. Die in den Figuren veranschaulichten Gasdurchströmungsrichtungen stellen lediglich Beispiele dar und es ist möglich, für jeden Anwendungsfall optimierte Gasdurchströmungsrichtungen zu verwirklichen. Der Wärmetauscher kann beispielsweise in Napfscheibe-Rippe-Bauweise ausgeführt werden. Ohne dass dies eine Einschränkung darstellen soll ist es beispielsweise denkbar, dass die gehäuseartige Halterung und gegebenenfalls eine ihr zugeordnete Seitenlasche aus Stahl gebildet sind und bei der Montage mit dem Wärmetauscher verschraubt werden. Die Erfindung ermöglicht eine einteilige, einfach aufgebaute, druckfeste, mit Fügeflächen/Dichtflächen versehene gehäuseartige Halterung, die eine geringere Versagensempfindlichkeit aufweist und die mit einem einfach und kostengünstig herstellbaren Wärmetauscher verwendet werden kann. Vorzugsweise bildet ein Seitenteil die Verschlussfläche des Wärmetauschers und somit einen Teil des Druckgehäuses. Weiterhin ergeben sich einfache Möglichkeiten zur Gas- beziehungsweise Luftführung in der gehäuseartigen Halterung. Die Kühlmittelanschlüsse in Form von einem Kühlmediumeinlassstutzen und einem Kühlmediumauslassstutzen können auf einer Seite angeordnet werden, ohne Durchführungen, die doppelt abgedichtet werden müssen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. System mit einem Wärmetauscher (10), insbesondere einem Kühler für ein Kraftfahrzeug, und mit einer gehäuseartigen Halterung (12) für den Wärmetauscher (10), wobei die gehäuseartige Halterung (12) eine Einschuböffnung (14) aufweist, durch die der Wärmetauscher (10) in die gehäuseartige Halterung (12) einschiebbar ist, wobei der Wärmetauscher (10) eine Verschlussfläche (16) aufweist, die die Einschuböffnung (14) nach dem Einschieben des Wärmetauschers (10) verschließt, die gehäuseartige Halterung einen sich im Querschnitt erweiternden Gaseinlassstutzen (34,38) auf einer Seite des Wärmetauschers (10) und einen sich im Querschnitt erweiternden Gasauslassstutzen (40,44) gegenüberliegend auf der anderen Seite des Wärmetauschers (10) aufweist, und die Einschuböffnung (14) durch Wände der gehäuseartigen Halterung (12) begrenzt wird, die sich an den Gaseinlassstutzen (34,38) und den Gasauslassstutzen (40,44) anschließen beziehungsweise die den Gaseinlassstutzen (34,38) und den Gasauslassstutzen (40,44) bilden oder die den Gaseinlassstutzen (34,38) und den Gasauslassstutzen (40,44) mitbilden, und wobei der Wärmetauscher (10) einen Kühlmediumeinlassstutzen (24) und einen Kühlmediumauslassstutzen (26) besitzt und der Kühlmediumeinlassstutzen (24) sowie der Kühlmediumauslassstutzen (26) an der Verschlussfläche (16) angeordnet und durch diese hindurchgeführt sind.

2. System nach Anspruch 1, **dadurch gekennzeichnet, dass** die Verschlussfläche (16) eine Flächennormale (18) aufweist, die sich nach dem Einschieben des Wärmetauschers (10) in die gehäuseartige Halterung (12) senkrecht zu einer Gasdurchströmungsrichtung (20) erstreckt, in der der Wärmetauscher (10) im Betrieb zur Kühlung eines Kühlmediums (22) von einem Gas durchströmt wird.

3. System nach einem der vorhergehenden Ansprüche, **dadurch gekennzeichnet, dass** der Kühlmediumeinlassstutzen (24) und/oder der Kühlmediumauslassstutzen (26) mit der Verschlussfläche (16) verlötet ist.

4. System nach einem der vorhergehenden Ansprüche, **dadurch gekennzeichnet, dass** die Verschlussfläche (16) eine Seitenfläche des Wärmetauschers (10) bildet.

5. System nach einem der vorhergehenden Ansprüche, **dadurch gekennzeichnet, dass** die Verschlussfläche (16) den Wärmetauscher (10) nach Art eines Kragens (28) erweitert.

6. System nach einem der vorhergehenden Ansprüche, **dadurch gekennzeichnet, dass** der Wärmetauscher (10) zumindest an einigen seiner Umfangsseiten Dichtmittel zur Abdichtung gegenüber der gehäuseartigen Halterung (12) aufweist.

7. System nach einem der vorhergehenden Ansprüche, **dadurch gekennzeichnet, dass** der Wärmetauscher (10) ein Kühlmittelkühler, ein Luftvorwärmer, ein Ladeluftkühler, ein Ladeluftvorkühler oder ein Ladeluftzusatzkühler ist.

8. System nach einem der vorhergehenden Ansprüche, **dadurch gekennzeichnet, dass** die gehäuseartige Halterung (12) einen Anschlussflansch (50) aufweist, der zur Befestigung eines Ladergehäuses (52) vorgesehen ist.

9. System nach einem der vorhergehenden Ansprüche, **dadurch gekennzeichnet, dass** die gehäuseartige Halterung (12) Bestandteil eines Ladergehäuses (52) ist.

## Claims

1. A system having a heat exchanger (10), particularly a radiator for a motor vehicle, and having a housing-like support (12) for the heat exchanger (10), wherein the housing-like support (12) has an insertion opening (14) through which the heat exchanger (10) can be inserted into the housing-like support (12), wherein the heat exchanger (10) has a sealing surface (16), which seals the insertion opening (14) once the heat exchanger (10) has been inserted, the housing-like support has a gas intake port (34, 38) having a widened cross-section on one side of the heat exchanger (10) and a gas outlet port (40, 44) having a widened cross-section, opposite said gas intake port on the other side of the heat exchanger (10), and the insertion opening (14) is bounded by walls of the housing-like support (12), which are connected to the gas intake port (34, 38) and the gas outlet port (40, 44), or which form the gas intake port (34, 38) and the gas outlet port (40, 44), or which are integrated with the gas intake port (34, 38) and the gas outlet port (40, 44), and wherein the heat exchanger (10) has a coolant intake port (24) and a coolant outlet port (26), and the coolant intake port (24) and the coolant outlet port (26) are arranged on the sealing surface (16) and pass through said surface.

2. The system according to claim 1, **characterized in that** the sealing surface (16) has a surface normal (18) which extends perpendicular to a gas flow direction (20) once the heat exchanger (10) has been inserted into the housing-like support (12), in which direction a gas flows through the heat exchanger (10) for the purpose of cooling a coolant (22) during operation.

3. The system according to any one of the preceding claims, **characterized in that** the coolant intake port (24) and/or the coolant outlet port (26) is soldered to the sealing surface (16).

4. The system according to any one of the preceding claims, **characterized in that** the sealing surface (16) forms a lateral surface of the heat exchanger (10).

5. The system according to any one of the preceding claims, **characterized in that** the sealing surface (16) widens the heat exchanger (10) in the manner of a cellar (28).

6. The system according to any one of the preceding claims, **characterized in that** the heat exchanger (10) has sealing means on at least some of its peripheral sides, for the purpose of forming a seal against the housing-like support (12).

7. The system according to any one of the preceding claims, **characterized in that** the heat exchanger (10) is a coolant cooler, an air pre-heater, a charge air cooled, a charge air pre-cooler, or a charge air supplemental cooler.

8. The system according to any one of the preceding claims, **characterized in that** the housing-like support (12) has a connecting flange (50), which is provided for attacking a blower housing (52)

9. The system according two any one of the preceding claims, **characterized in that** the housing-like support (12) is a component of a blower housing (52).

## Revendications

1. Système comprenant un échangeur de chaleur (10), en particulier un refroidisseur pour un véhicule automobile, et un support (12) en forme de carter pour l'échangeur de chaleur (10), où le support (12) en forme de carter présente une ouverture d'insertion (14) à travers laquelle l'échangeur de chaleur (10) peut être inséré dans le support (12) en forme de carter, où l'échangeur de chaleur (10) présente une surface de fermeture (16) qui ferme l'ouverture d'insertion (14) après l'insertion de l'échangeur de chaleur (10), le support en forme de carter présentant, sur un côté de l'échangeur de chaleur (10), une tubulure d'admission de gaz (34, 38) s'élargissant en section, et, sur l'autre côté opposé de l'échangeur de chaleur (10), une tubulure d'évacuation de gaz (40, 44) s'élargissant en section, et l'ouverture d'insertion (14) est délimitée par des parois du support (12) en forme de carter, parois qui font suite à la tubulure d'admission de gaz (34, 38) et à la tubulure d'évacuation de gaz (40, 44) et qui forment respectivement la tubulure d'admission de gaz (34, 38) et la tubulure d'évacuation de gaz (40, 44) ou bien qui forment en même temps la tubulure d'admission de gaz (34, 38) et la tubulure d'évacuation de gaz (40, 44), et où l'échangeur de chaleur (10) comporte une tubulure d'entrée du milieu de refroidissement (24) et une tubulure de sortie du milieu de refroidissement (26), et la tubulure d'entrée du milieu de refroidissement (24) ainsi que la tubulure de sortie du milieu de refroidissement (26) sont disposées sur la surface de fermeture (16) et traversées par celle-ci.

2. Système selon la revendication 1, **caractérisé en ce que** la surface de fermeture (16) présente une normale (18) à ladite surface, normale qui, après l'insertion de l'échangeur de chaleur (10) dans le support (12) en forme de carter, s'étend perpendiculairement à une direction de circulation du gaz (20), direction dans laquelle l'échangeur de chaleur (10), au cours du fonctionnement pour le refroidissement d'un milieu de refroidissement (22), est traversé par un gaz.

3. Système selon l'une quelconque des revendications précédentes, **caractérisé en ce que** la tubulure d'entrée du milieu de refroidissement (24) et / ou la tubulure de sortie du milieu de refroidissement (26) est brasée aven la surface de fermeture (16).

4. Système selon l'une quelconque des revendications précédentes, **caractérisé en ce que** la surface de fermeture (16) forme une surface latérale de l'échangeur de chaleur (10).

5. Système selon l'une quelconque des revendications précédentes, **caractérisé en ce que** la surface de fermeture (16) élargit l'échangeur de chaleur (10) à la façon d'une collerette (28).

6. Système selon l'une quelconque des revendications précédentes, **caractérisé en ce que** l'échangeur de chaleur (10) présente, au soins sur certaines de ses côtés circonférentiels, des moyens d'étanchéité servant à assurer l'étanchéité par rapport au support (12) en forme de carter.

7. Système selon l'une quelconque des revendications précédentes, **caractérisé en ce que** l'échangeur de chaleur (10) est un radiateur à liquide de refroidissement, un préchauffeur d'air, un refroidisseur d'air de suralimentation, un prérefroidisseur d'air de suralimentation ou un refroidisseur auxiliaire d'air de suralimentation.

8. Système selon l'une quelconque des revendications précédentes, **caractérisé en ce que** le support (12) en forme de carter présente une bride de raccordement (50) qui est prévue pour la fixation d'un carter de compresseur d'alimentation (52).

9. Système selon l'une quelconque des revendications précédentes, **caractérisé en ce que** le support (12) en forme de carter fait partie d'un carter de compresseur d'alimentation (52).
